# FASCICULE DE BREVET EUROPEEN

(11) **EP 1 449 315 B1**
(45) Date de publication et mention de la délivrance du brevet: **11.08.2010**
(21) Numéro de dépôt: 02799761.8
(22) Date de dépôt: 28.11.2002
(51) Int. Cl.: H04B 7/26

(54) **PROCÉDÉ DE SYNCHRONISATION DANS UN RÉSEAU CELLULAIRE DE TÉLÉCOMMUNICATIONS, PROCÉDÉ DE TRANSFERT INTERCELLULAIRE ET TERMINAL CORRESPONDANT**
SYNCHRONISATIONSVERFAHREN IN EINEM ZELLULAREN KOMMUNIKATIONSSYSTEM, ÜBERGABEVERFAHREN UND ENDGERÄT
SYNCHRONIZATION METHOD IN A CELLULAR TELECOMMUNICATION NETWORK, HAND-OVER METHOD AND CORRESPONDING TERMINAL

(30) Priorité: 28.11.2001 FR 0115472
(43) Date de publication de la demande: 25.08.2004
(73) Titulaire: Sierra Wireless, 92442 Issy Les Moulineaux Cedex (FR)
(72) Inventeur: BASSOMPIERRE, Antoine, F-75014 Paris (FR); GOUDARD, Nathalie, F-92400 Courbevoie (FR)
(74) Mandataire: Vidon, Patrice
(86) Numéro de dépôt international: PCT/FR2002/004103
(87) Numéro de publication internationale: WO 2003/047128

(56) Documents cités:
- WO-A-00/51393
- WO-A-01/20942
- WO-A-01/63953
- OVESJÖ FREDRIK: "UTRA PHYSICAL LAYER DESCRIPTION FDD PARTS" EUROPEAN TELECOMMUNICATION STANDARD, XX, XX, 25 juin 1998 (1998-06-25), pages 1-41, XP002141421

## Description

La présente invention se rapporte au domaine de la radiotéléphonie cellulaire. Plus précisément, l'invention concerne la synchronisation d'un terminal sur une cellule de réseau de radiocommunication mobile.

Dans un réseau cellulaire, par exemple de type UMTS (de l'anglais « Universal Mobile Telecommunication System » ou « Système de Télécommunication Mobile Universel ») ou 3GPP (ou « Projet de partenariat pour la troisième génération » de l'anglais « 3^{rd} Generation Partnership Project »), un terminal doit se synchroniser sur une cellule pour pouvoir émettre et/ou recevoir des données rapidement. Afin d'optimiser les transmissions d'information en provenance ou à destination de terminaux, il est donc nécessaire de permettre une synchronisation rapide des terminaux sur une cellule du réseau.

On connaît des techniques de synchronisation basées sur l'utilisation d'un canal dédié par exemple de type SCH (ou canal de synchronisation de l'anglais « Synchronisation Channel »). Cette synchronisation est en général relativement efficace mais présente l'inconvénient d'être lente dans certaines circonstances, notamment lorsque le terminal passe d'une cellule à l'autre en changeant de fréquence.

Par ailleurs, pour prendre en compte la mobilité des terminaux dans un réseau cellulaire sans couper les communications en cours, le réseau doit gérer des transferts de cellules, ou « hand-over », qui permettent à un terminal de changer très rapidement de cellule. On note qu'un « hand-over » est notamment mis en oeuvre lorsqu'il est préférable qu'un terminal en communication avec une station fixe (station de base ou BS de l'anglais « Base Station » en charge de la gestion d'une cellule) change de station de base qu'il lui est associée pour communiquer. Un « hand-over » peut-être mis en oeuvre pour différentes raisons : mauvaise qualité des liens radio, saturation d'une station de base dues à de trop nombreuses communications, mobilité du terminal qui s'éloigne d'une première station et se rapproche d'une autre station, meilleure adaptation d'une station de base pour le service demandé par le terminal...

Pour des raisons d'efficacité, de qualité et de fluidité du service offert à l'utilisateur, il est nécessaire que ce « hand-over » se fasse de manière rapide.

Classiquement, on met en oeuvre une procédure de « hand-over » inter-fréquence (c'est-à-dire lorsque les fréquences des cellules de rattachement d'un terminal avant et après « hand-over » sont différentes), qui est relativement lente et génératrice d'interférences.

En effet, pour effectuer un « hand-over » inter-fréquence dans un système de radiotéléphonie de troisième génération mettant en oeuvre une technique d'accès au canal basée sur un accès multiple à répartition par code ou CDMA (de l'anglais « Code Division Multiple Access »), par exemple dans le système UMTS ou 3GPP, un terminal mobile doit utiliser les périodes vacantes du mode dit « mode compressé » pour se synchroniser sur différentes cellules afin de faire des mesures de puissance sur ces cellules. Pour la synchronisation, le terminal mobile doit écouter le canal SCH primaire, puis le canal SCH secondaire, puis le canal CPICH sur lequel il fait la mesure de puissance.

Il a notamment été présenté dans le document WO 0163953 une technique de « hard-handover », dans un réseau de radio téléphonie (en particulier UMTS).

Selon cette technique, une trame (m+1) transmise durant un « hard-handover » entre une station mobile (MS) et
- une première station de base (BS1) qui est momentanément responsable de la communication avec la MS ; et/ou
- une deuxième station de base (BS2) qui deviendra ultérieurement responsable de la communication avec la MS
est transmise dans un mode compressé en utilisant les trous (« gaps ») de communication résultant du mode compressé lors d'une procédure de « hard-handover ».

Cette technique de l'art antérieur présente l'inconvénient d'avoir une phase de synchronisation très longue car les périodes vacantes issues du mode compressé sont de courte durée.

Les réseaux UMTS et 3GPP sont donc définis de telle sorte qu'avant d'initialiser une communication, le terminal mobile soit déjà sur une cellule optimale, ce qui permet d'éviter d'avoir recours à un « hand-over » dès le début d'une communication.

L'invention selon ses différents aspects a notamment pour objectif de pallier ces inconvénients de l'art antérieur.

Plus précisément, un premier objectif de l'invention est de permettre une synchronisation rapide lors du passage d'un terminal d'une cellule à une autre.

L'invention a également pour objectif de permettre un « hand-over » rapide de terminal notamment dans le cas d'une procédure de « hand-over » inter-fréquence.

L'invention a également pour objectif de permettre la mise en oeuvre des équipements destinés aux réseaux de communications mobiles de troisième génération, en ne nécessitant pas ou peu de modifications des normes actuelles en vigueur et notamment la norme UMTS FDD (« Frequency Division Duplex ») (en particulier la série 25 de cette norme) définie et diffusée par le comité 3GPP (ou « Projet de partenariat pour la troisième génération » de l'anglais « 3^{rd} Generation Partnership Project »).

Dans ce but, l'invention propose un procédé de synchronisation d'un terminal dans un réseau de communication cellulaire comprenant une pluralité de cellules, dont une première et une seconde cellules associées respectivement à une première et une seconde station de base, les première et seconde cellules se recoupant au moins en partie sur une zone géographiquement commune et étant synchronisées, remarquable en ce qu'il comprend, le terminal étant présent dans la zone géographiquement commune:
- une première étape de synchronisation sur un signal de synchronisation (SCH) émis par la première station de base et reçu par le terminal ;
- une seconde étape de synchronisation sur un signal prédéterminé (CPICH) dédié au traitement des trajets multiples, émis par la seconde station de base et reçu par le terminal.

Ici, les première et seconde cellules sont parfaitement synchronisées entre elles ou pseudo-synchronisées, c'est-à-dire synchronisées avec une certaine tolérance de synchronisation.

La première synchronisation du terminal est parfaite ou quasi-parfaite relativement à la première station de base alors qu'elle peut être grossière sur la deuxième station de base.

En revanche, la seconde synchronisation du terminal est parfaite ou quasi-parfaite relativement à la seconde station de base.

Selon une caractéristique particulière, le procédé de synchronisation est remarquable en ce que le terminal met en oeuvre une étape de détermination d'au moins un trajet correspondant au signal prédéterminé émis par la seconde station de base, l'étape de détermination alimentant la seconde étape de synchronisation et étant mise en oeuvre par des moyens d'analyse des trajets multiples subis par le signal prédéterminé, le trajet ou un des trajets correspondant au signal prédéterminé, dit premier trajet, étant considéré comme base de synchronisation.

Ainsi, la mise en oeuvre de la synchronisation sur la seconde station de base selon l'invention est relativement simple puisqu'elle utilise des moyens déjà mis en oeuvre pour l'analyse des trajets multiples affectant le signal prédéterminé (par exemple du canal CPICH dans le cadre de la norme UMTS).

En outre, l'invention permet d'économiser de la bande passante et de simplifier la mise en oeuvre seconde station de base puisqu'un canal spécifique de synchronisation (par exemple canal SCH dans le cadre de la norme UMTS) n'est pas nécessaire.

Selon une caractéristique particulière, le procédé de synchronisation est remarquable en ce que la première étape de synchronisation tolère des erreurs de synchronisation de l'ordre de 5 à 50 µs relativement à la seconde station de base.

Selon une caractéristique particulière, le procédé de synchronisation est remarquable en ce que la première étape de synchronisation tolère des erreurs de synchronisation de l'ordre de 5 à 30 µs relativement à la seconde station de base.

Selon une caractéristique particulière, le procédé de synchronisation est remarquable en ce que la seconde synchronisation tolère des erreurs de synchronisation inférieures à 5 µs relativement à la seconde station de base.

Ainsi, l'invention permet une première synchronisation du terminal relativement grossière vis-à-vis de la seconde station de base (pouvant aller jusqu'à 30 µs voire 50 µs) et une seconde synchronisation du terminal fine voire parfaite vis-à-vis de cette même station de base.

Selon une caractéristique particulière, le procédé de synchronisation est remarquable en ce que la première station de base transmet une information de synchronisation à la seconde station de base permettant la synchronisation de la seconde station de base sur la première station de base.

Selon une caractéristique particulière, le procédé de synchronisation est remarquable en ce que l'information de synchronisation est transmise sur une liaison filaire.

Selon une caractéristique particulière, le procédé de synchronisation est remarquable en ce que l'information de synchronisation est transmise via le signal de synchronisation émis par la première station de base.

Selon une caractéristique particulière, le procédé de synchronisation est remarquable en ce qu'un équipement tiers transmet une information de synchronisation à la première station de base et à la seconde station de base permettant la synchronisation de la seconde station de base sur la première station de base.

Ainsi, la synchronisation des première et seconde stations de base est relativement simple à mettre en oeuvre.

Elle peut notamment être mise en oeuvre :
- par l'intermédiaire d'un canal de synchronisation existant (par exemple SCH dans le cadre de l'UMTS) lorsque la seconde station de base capte ce signal émis par la première station de base ; ou
- par une liaison filaire dédiée ou utilisant l'infrastructure du réseau ce qui permet de s'affranchir d'éventuels problèmes de transmission/réception d'un signal hertzien ; ou encore
- grâce à un équipement tiers qui délivre un signal de synchronisation aux première et station de base, ce qui permet un contrôle fin de la synchronisation par un équipement tiers qui peut être dédié ou, par exemple, être relié à ou faire partie d'un équipement de contrôle des première et deuxième station de base.

Selon l'invention, la différence de synchronisation peut également être contrôlée de sorte que la première synchronisation d'un terminal sur la première station de base soit la plus fine possible vis-à-vis de la deuxième station de base. On pourra notamment prendre en compte le délai de propagation du signal de synchronisation émis par la première station de base à destination de la deuxième station de base. Un équipement de réseau (première station de base ou équipement de contrôle) pourra également informer le terminal du décalage de synchronisation entre les deux stations de base afin que le terminal puisse le prendre en compte.

L'invention concerne aussi un procédé de transfert intercellulaire d'un terminal dans un réseau de communication cellulaire comprenant une pluralité de cellules, dont une première et une seconde cellules associées respectivement à une première station de base et à une seconde station de base, les première et seconde cellules se recoupant au moins en partie sur une zone géographiquement commune et étant synchronisées, et le terminal pouvant être notamment en mode communication, lorsqu'une communication est établie entre le terminal et un terminal distant, et en mode veille, lorsque le terminal n'est pas en mode communication mais présent et disponible pour une communication, dans une des cellules du réseau, remarquable en ce que le terminal étant présent dans la zone géographiquement commune, le procédé comprend:
- une première étape de synchronisation sur un signal de synchronisation (SCH) émis par la première station de base et reçu par le terminal;
- une seconde étape de synchronisation sur signal prédéterminé (CPICH) dédié au traitement des trajets multiples, émis par la seconde station de base et reçu par le terminal ;
lorsque le terminal dans un mode communication avec la première station de base est transféré de la première cellule à la seconde cellule.

Ainsi, l'invention permet un transfert de terminal entre deux cellules (ou « hand-over » rapide même si les première et seconde stations de base n'utilisent pas les mêmes fréquences.

Selon une caractéristique particulière, le procédé de transfert intercellulaire est remarquable en ce qu'il met en oeuvre un procédé de synchronisation tel que décrit précédemment.

Selon une caractéristique particulière, le procédé de transfert intercellulaire est remarquable en ce que la première cellule englobe la seconde cellule et en ce que la première station de base gère le mode veille pour les terminaux présents dans la première cellule, la seconde station de base pouvant prendre en charge le mode communication.

Selon une caractéristique particulière, le procédé de transfert intercellulaire est remarquable en ce que la première station de base gère l'ouverture d'une communication pour les terminaux présents dans la seconde cellule, puis le réseau transfère la gestion de la communication à la seconde station de base.

L'invention concerne également un terminal destiné à coopérer avec au moins une première station de base associée à une première cellule de réseau cellulaire de communication, le terminal pouvant être notamment en mode communication, lorsqu'une communication est établie entre le terminal et un terminal distant, et en mode veille, lorsque le terminal n'est pas en mode communication mais présent et disponible pour une communication, dans une des cellules du réseau, remarquable en ce qu'il comprend:
- des moyens de première synchronisation sur un signal de
   synchronisation (SCH) émis par la première station de base et reçu par le terminal ;
- des moyens de seconde synchronisation sur signal prédéterminé (CPICH) dédié au traitement des trajets multiples, émis par une seconde station de base et reçu par le terminal ;
une seconde cellule du réseau étant associée à la seconde station de base ; et les première et seconde cellules se recoupant au moins en partie et étant synchronisées.

Selon une caractéristique particulière, le terminal est remarquable en ce que les moyens de synchronisation comprennent des moyens d'analyse des trajets multiples subis par le signal prédéterminé, aptes à effectuer une détermination d'au moins un trajet correspondant au signal prédéterminé émis par la seconde station de base, le trajet ou un des trajets correspondant au signal prédéterminé, dit premier trajet, étant considéré comme base de synchronisation.

Selon une caractéristique particulière, le terminal est remarquable en ce que la première synchronisation tolère des erreurs de synchronisation de l'ordre de 5 à 50 µs.

Selon une caractéristique particulière, le terminal est remarquable en ce que la première synchronisation tolère des erreurs de synchronisation de l'ordre de 5 à 30 µs.

Selon une caractéristique particulière, le terminal est remarquable en ce que la seconde synchronisation tolère des erreurs de synchronisation inférieures à 5 µs.

L'invention concerne, en outre, une station de base, dite seconde station de base, destinée à être associée à une seconde cellule de réseau cellulaire de télécommunication, le réseau comprenant une pluralité de cellules dont une première cellule associée à une première station de base et au moins un terminal, les première et seconde cellules se recoupant au moins en partie sur une zone géographiquement commune, remarquable en ce que la seconde station de base comprend des moyens de synchronisation sur la première station de base de sorte qu'au moins un des terminaux puisse mettre en oeuvre :
- une première étape de synchronisation sur un signal de synchronisation (SCH) émis par la première station de base et reçu par le terminal ;et
- une seconde étape de synchronisation sur signal prédéterminé (CPICH) dédié au traitement des trajets multiples, émis par la seconde station de base et reçu par le terminal.

Selon une caractéristique particulière, la station de base est remarquable en ce qu'elle comprend des moyens de gestion d'un mode de communication du terminal et qu'elle ne comprend pas de moyens de gestion d'un mode veille du terminal, le terminal pouvant être notamment en mode communication, lorsqu'une communication est établie entre le terminal et un terminal distant, et en mode veille, lorsque le terminal n'est pas en mode communication mais présent et disponible pour une communication, dans une des cellules du réseau.

De plus, l'invention concerne un réseau cellulaire de télécommunication cellulaire comprenant une pluralité de cellules, dont une première cellule associée à une première station de base et au moins une seconde cellule, la première cellule et chacune des secondes cellules se recoupant au moins en partie sur une zone géographiquement commune et étant synchronisées, remarquable en ce que la ou les secondes cellules sont associées chacune à au moins une seconde station de base telle que précédemment décrite.

Les avantages du procédé de transfert intercellulaire, du terminal, de la seconde station de base du réseau sont les mêmes que ceux du procédé de synchronisation de terminal, ils ne sont pas détaillés plus amplement.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de réseau conforme à l'invention selon un mode particulier de réalisation;
- la figure 2 illustre le réseau de la figure 1 après établissement d'une communication entre un terminal et une station de base associée à une micro-cellule;
- la figure 3 décrit une station de base de « micro-cellule » du réseau illustré dans les figures 1 et 2;
- la figure 4 illustre un protocole de communication entre différents élément du réseau permettant le passage d'une situation illustrée en regard de la figure 1 à une situation illustrée en regard de la figure 2 ;
- la figure 5 présente un synoptique de réseau conforme à l'invention selon une variante de réalisation; et
- la figure 6 illustre un protocole de communication entre différents élément du réseau de la figure 5 lors d'une procédure de « hand-over » rapide.

Le problème du changement de cellules est lié à la nécessaire resynchronisation temporelle d'un terminal en cours de communication sur la nouvelle cellule.

Le principe général de l'invention consiste à simplifier cette opération et repose donc notamment :
- sur une synchronisation ou une pseudo-synchronisation de cellules voisines ou se superposant partiellement ou en totalité (cas notamment d'une cellule de grande taille englobant une cellule de petite taille) ; et
- sur le fait que la distance entre un terminal et une station de base de la cellule vers laquelle se fait le « hand-over » est suffisamment petite pour considérer que le terminal n'a pas besoin d'écouter les canaux de synchronisation SCH de cette station de base.

On note que la synchronisation entre les cellules n'a pas besoin, selon l'approche de l'invention, d'une précision importante et qu'une pseudo-synchronisation peut suffire. Par pseudo-synchronisation, on entend ici une synchronisation avec une précision inférieure à 50 µs et préférentiellement inférieure ou égale à 30 µs.

Cette pseudo-synchronisation peut notamment être obtenue :
- par utilisation d'une liaison filaire entre deux stations associées respectivement à deux cellules (cette liaison pouvant être dédié à la synchronisation ou une liaison servant à transporter les données) ; ou
- par écoute et traitement par une première station de base du signal de synchronisation émis par une seconde station de base sur un canal de synchronisation.

On note que les terminaux utilisateurs sont notamment des terminaux mobiles ou fixes sans fil (par exemple des téléphones mobiles ou tout autre appareil (notamment ordinateurs portables) comprenant un système de communication sans fil).

Lorsque les deux cellules peuvent être pseudo-synchronisées, par écoute et traitement par une première station de base rattachée à une première cellule du signal de synchronisation émis par une seconde station de base rattachée à une seconde cellule sur un canal de synchronisation SCH (« Synchronisation Channel ») et compte tenu des très faibles dérives des références de fréquence des stations de base, il n'est pas nécessaire que les cellules se re-synchronisent souvent l'une par rapport à l'autre.

Par ailleurs, la distance entre le terminal et une station de base vers laquelle la procédure de « hand-over » est mise en oeuvre étant relativement petite, l'incertitude temporelle pour se synchroniser est faible et la phase de synchronisation de la cellule de destination lors du « hand-over » se fait donc uniquement par écoute du canal CPICH (ou « canal commun pilote » de l'anglais « Common PIlot CHannel ») et non du canal SCH, ces deux canaux étant associés à la station de base de la cellule de destination.

Le canal CPICH est utilisé selon la norme UMTS pour la détermination de la phase et pour la recherche des différents échos d'une cellule synchronisée

Dans le cadre de l'invention, le canal CPICH sert également de canal de synchronisation.

On note que la partie électronique du terminal permettant la recherche des différents échos d'une cellule synchronisée peut être utilisée pour se synchroniser sur une cellule dans le cas où l'asynchronisme n'est pas trop important.

Les terminaux UMTS sont prévus pour chercher les différents échos d'une cellule à environ plus ou moins 26 µs autour de l'écho connu qui est théoriquement le trajet direct s'il existe.

L'utilisation du canal CPICH permet donc de synchroniser une cellule dont la synchronisation serait connue à plus ou moins 26 microsecondes près.

Ces 26 microsecondes doivent correspondre dans le cadre de l'invention à l'erreur de synchronisation entre les deux cellules (les deux cellules peuvent être pseudo synchronisées comme précédemment indiqué) ainsi qu'à l'incertitude liée au temps de propagation inconnu dans la cellule destination.

Il faut donc que la cellule de destination soit de petite taille, à titre d'exemple dans une cellule de 3 km de rayon, le temps de propagation est compris entre 0 µs (si le terminal est très proche de la station de base) et environ 10 µs si le terminal est à la limite de la cellule.

Il est important de noter que l'invention ne nécessite pas d'adapter toutes les cellules des réseaux UMTS. Sur un même réseau, certaines cellules peuvent fonctionner suivant le mécanisme de l'invention, d'autres cellules n'étant pas pseudo-synchronisées.

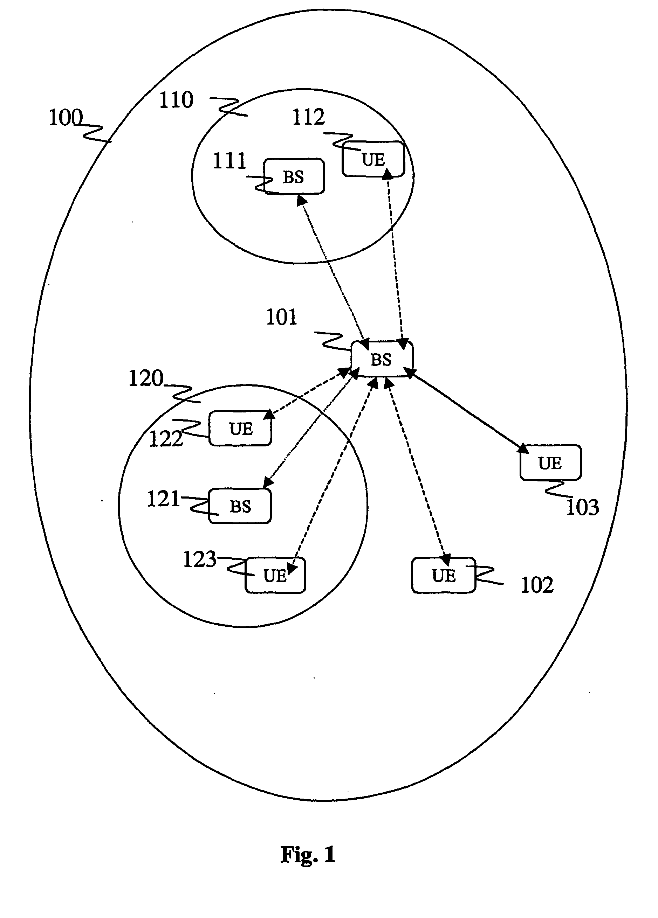

On présente, en relation avec la figure 1, un synoptique de réseau de radiotéléphonie mobile mettant en oeuvre l'invention.

Le réseau est par exemple un réseau compatible avec la norme UMTS(« Universal Mobile Telecommunication System ») définie par le comité 3GPP.

Le réseau comprend une cellule de grande taille 100 (ou « macro-cellule ») qui est gérée par une station de base101 (BS).

Cette cellule 100 englobe deux cellules 110 et 120 de plus petite taille (« micro-cellule » ou « pico-cellule »).

Chacune des cellules 110 et 120 comprend respectivement une station de base respectivement 111 et 121 pouvant gérer les communications à l'intérieur de la cellule correspondante.

On note qu'à titre illustratif, plusieurs terminaux (UE) sont présents dans la cellule 100. Certains de ces terminaux sont aussi présents dans l'une des cellules 110 et 120 de petite taille.

Ainsi, le terminal 112 est à l'intérieur de la cellule 110 et peut donc recevoir ou émettre des signaux en provenance ou à destination des stations de base 101 et 111.

De même, les terminaux 122 et 123 sont à l'intérieur 120 et peuvent donc recevoir ou émettre des signaux en provenance ou à destination des stations de base 101 et 121.

Néanmoins, les terminaux 102 et 103 présents dans la cellule 100 mais non dans l'une des cellules 110 et 120 peuvent ou émettre des signaux en provenance ou à destination de la station de base 101 mais non des stations de base 111 ou 121.

Sur la figure 1, les liaisons entre les différents éléments de la cellule 100 ont été représentées, à un instant donné :
- en traits pointillés fins pour les liaisons entre stations de base ;
- en traits pointillés larges pour les liaisons entre la station de base 101 et les terminaux en états de veille (les terminaux 112, 122, 123 et 102 selon l'exemple de la figure 1) ; et
- en traits pleins pour les liaisons de communication (liaison entre le terminal 103 et la station de base 101).

On note qu'ainsi certains terminaux sont en mode veille, c'est-à-dire dans un mode où les terminaux ne sont pas en mode communication mais présents et disponibles pour une communication dans une des cellules100, 110 ou 120. Ces terminaux dont notamment à l'écoute de signaux émis par la station de base 101 appartenant à la macro-cellule 100. Ces signaux sont émis sur :
- des canaux de transport communs correspondant aux services offerts vers les couches hautes du protocole de communication, notamment sur des canaux BCH ( ou « canal de diffusion » de l'anglais « Broadcast CHannel ») et PCH (ou « canal de recherche de mobile » de l'anglais « Paging CHannel ») ; et
- des canaux de transport communs correspondants à la couche physique du protocole de communication, notamment sur des canaux CPICH (ou « canal commun pilote » de l'anglais « Common PIlot CHannel »).

On note également qu'en mode veille, les terminaux ne sont pas à l'écoute des canaux dédiés.

En revanche, le terminal 103 n'est pas en mode veille puisqu'il est en communication avec la station de base 101 sur un canal dédié DCH (de l'anglais « Dedicated CHannel ») qui est à la fois montant et descendant.

Les canaux utilisés par les réseaux 3GPP sont bien connus de l'homme du métier des réseaux mobiles et sont notamment spécifiés dans la norme « 3^{rd} Generation Partnership Project ; Technical Specification Group Radio Access Network ; Physical Channels and mapping of transport channels onto physical channels (FDD) release 1999 » de référence 3GPP TS25.211 et diffusée par le bureau des publications de 3GPP. Ces canaux ne seront donc pas décrits plus amplement.

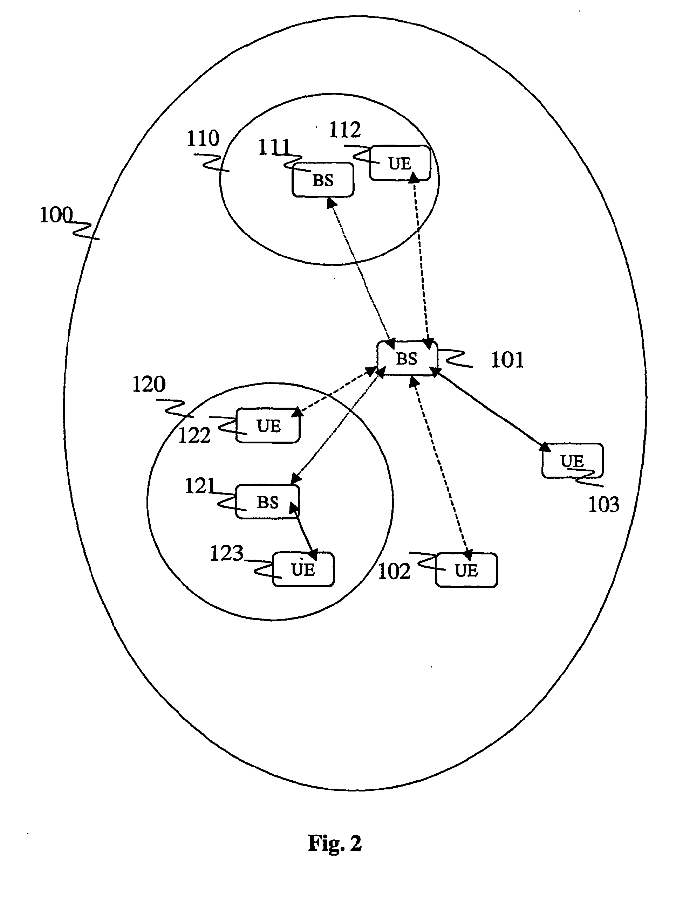

La figure 2 représente le réseau de la figure 1 lorsqu'un certain temps s'est écoulé et notamment après un établissement d'une communication entre le terminal 123 et la station de base 121 à l'intérieur de la micro-cellule 120.

On note que selon la figure 2, le terminal 123 est directement relié à la station de base 121 par l'intermédiaire d'un canal dédié DCH montant ou descendant permettant le transport de la voie et/ou des données échangées.

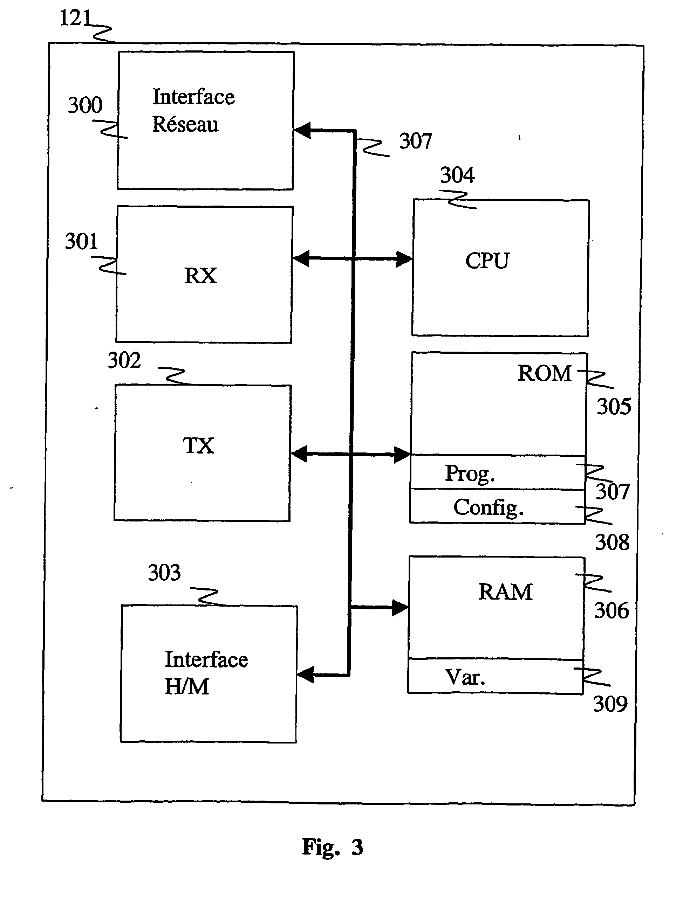

La figure 3 illustre schématiquement la station de base 121 telle qu'illustrée en regard des figures 1 et 2.

La station de base 121 comprend, reliés entre eux par un bus d'adresses et de données 307 :
- un processeur 304 ;
- une mémoire vive 306 ;
- une mémoire non volatile 305 ;
- une interface réseau filaire 300 permettant une liaison vers une infrastucture fixe du réseau mobile ou vers d'autres réseaux;
- une interface radio de réception 301 permettant de recevoir les signaux émis par les terminaux en communication avec la station de base 121 sur des canaux montants dédiés et des signaux émis par la station de base 101 notamment sur le canal de synchronisation SCH (de l'anglais « Synchronisation CHannel ») (on note que les normes UMTS actuelles ne prévoient que le canal SCH soit écouté uniquement par des équipements d'utilisateurs et non par une station de base) ;
- une interface radio d'émission 302 permettant d'émettre des signaux sur des canaux dédiés descendant et sur des canaux de transport communs correspondant à la couche physique (et non aux couches supérieures du protocole de communication) (notamment canal CPICH) ; et
- une interface homme/machine 303 permettant un dialogue avec la machine pour le contrôle et la maintenance.

La mémoire vive 306 conserve des données, des variables 309 et des résultats intermédiaires de traitement.

La mémoire non volatile 305 conserve dans des registres qui par commodité possèdent les mêmes noms que les données qu'ils conservent, notamment :
- le programme de fonctionnement du processeur 304 dans un registre « *prog* » 310 et
- les paramètres 311 de configuration de la station de base 121.

On note que la station de base 121 est mise en oeuvre de manière plus simple que la station de base 101 et comprend notamment un programme de fonctionnement plus simple que celui de la station de base 101 car n'incluant pas les fonctionnalités de canaux communs que la station de base 121 n'a pas à gérer.

On note qu'un terminal non représenté comprend reliés entre eux par un bus d'adresses et de données :
- un processeur ;
- une mémoire vive ;
- une mémoire non volatile ;
- une interface radio de réception permettant de se synchroniser en mode veille sur un signal de type SCH émis par la station de base 101 puis, en mode communication, sur un signal de type CPICH émis par la station de base 121 et de recevoir d'une manière générale les signaux émis par les stations de base 101 et 121 sur des canaux descendants dédiés;
- une interface radio d'émission permettant d'émettre des signaux sur des canaux dédiés montants et sur des canaux de transport communs montants; et
- une interface homme/machine permettant un dialogue avec la machine pour le contrôle et la maintenance.

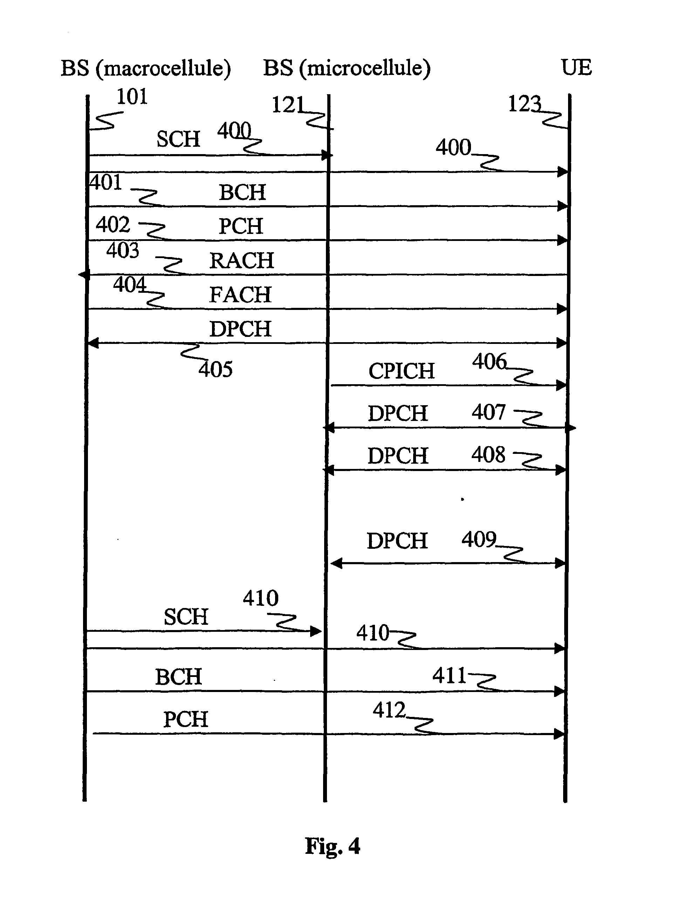

La figure 4 illustre un protocole de communication entre les stations de base 101 et 121 et le terminal 123 lors du passage de la situation illustrée en regard de la figure 1 où le terminal 123 est en mode veille à une situation illustrée en regard de la figure 2 où le terminal 123 est en communication avec la station de base 121.

La station de base 101 émet un signal 400 sur le canal descendant SCH à destination des stations de bases et des terminaux présents dans la macro-cellule 100 et notamment de la station de base 121 et du terminal 123. Ainsi, la station de base 121 et le terminal 123 (qui est, selon la figure 1, en mode veille) sont synchronisés sur le canal SCH de la station de base 101.

On note que ce signal SCH est émis régulièrement par la station de base 101 et que dès que la pseudo-synchronisation de la station de base 121 se dégrade au delà d'un certain seuil prédéterminé, la station de base 121 se resynchronise sur la station de base 101.

On note également que le fait que les stations de base 101 et 121 soient fixes et donc que le délai de propagation du signal entre ces deux stations est connu. On peut ainsi utiliser la connaissance de ce délai de propagation pour améliorer la synchronisation du terminal sur la station de base 121 en mettant en oeuvre :
- un retard de synchronisation de la station de base 121 par rapport au signal SCH émis par la station de base 101, ce retard étant par exemple égal au temps de propagation du signal SCH entre les stations de base 101 et 121 ; et/ou
- un signal de « hand-over » (signal 405 détaillé plus loin) émis vers le terminal 123 et véhiculant une information indiquant la position de la synchronisation.

La station de base 101 émet également un signal 401 sur le canal BCH. Ce signal descendant indique au terminal 123 quel canal PCH il doit écouter. Ainsi, après réception de ce signal, le terminal 123 se met en écoute du canal PCH indiqué par le signal 401.

Puis, la station de base 101 émet un signal à destination du terminal 123 sur le canal PCH indiqué par le signal 401, ce signal permettant de détecter un appel entrant.

Ensuite, en supposant que le terminal 123 désire initialiser une communication, il émet un signal 403 sur le canal RACH (de l'anglais « Random Access CHannel » qui est un canal commun correspondant à un service de couche haute d'accès au canal), ce signal 403 indiquant à la station de base 101 que le terminal 103 demande l'établissement d'une communication.

Puis, la station de base 101 émet un signal 404 d'allocation de canal de communication sur le canal FACH (de l'anglais « Fast Access CHannel » qui est également un canal commun correspondant à un service de couche haute).

Ensuite, la communication s'établit entre le terminal 123 et la station de base 101. Un ou plusieurs signaux 405 contenant des données correspondant à une application du terminal puis des données de contrôle dédiées au handover sont ainsi échangées sur le canal bidirectionnel DPCH.

On note que le hand-over permettant le passage d'une communication du terminal 123 vers la station de base 121 se fait sur décision du réseau (notamment du RNC ou « Radio Network Controller » relié aux stations de base 101 et 121) en fonction de critères multiples, notamment le débit, la qualité de la communication et les spécificités de la station de base 121 (notamment le fait qu'elle est bien adaptée à gérer les communications à haut débit).

La situation du réseau devient alors celle illustrée en regard de la figure 2.

Puis, le terminal 123 se met en écoute du canal pilote 406 CPICH qui permet selon l'invention d'affiner la synchronisation du terminal 123. En effet, si la cellule 120 est de petite taille et que la station de base 121 est pseudo-synchronisée sur la station 101 (c'est-à-dire si la synchronisation entre les cellules 120 et 100 est grossière et non parfaite, l'erreur de synchronisation étant inférieure à environ 20 ou 30µs alors dans les réseaux synchronisés, connus en soi, l'erreur sur la synchronisation est inférieure à 5 µs), l'erreur de synchronisation résultante entre le terminal 123 et la station de base 121 peut être compensée par utilisation du signal 406. En effet, le terminal 123 comprend des moyens permettant de tirer partie des trajets multiples affectant un signal émis par une station de base (Ce phénomène de trajets multiples est bien connu de l'homme du métier et est notamment la conséquence de réflexions sur des obstacles d'un signal émis dans plusieurs directions, les différents signaux reçus issus d'un même signal émis mais ayant suivis différents trajets sont généralement d'amplitudes différentes et déphasés). On note qu'en particulier un récepteur de type « rake » permet de déterminer les différents retards affectant un signal multi-trajet. Ainsi, si le retard n'est pas trop important (c'est-à-dire inférieur à 20 µs dans le cadre de la norme 3GPP), le terminal 123 est capable de se synchroniser sur la station de base en utilisant le canal CPICH.

Ainsi, en considérant qu'un premier trajet se situe à un instant précis fonction de la synchronisation avec la station de base 101, le récepteur du terminal 123 se calant sur ce trajet hypothétique cherche au moins un trajet correspondant à un signal émis sur canal CPICH de la station de base avec les moyens utilisés par ailleurs pour la détermination des trajets multiples dans un signal émis sur un canal CPICH. Ceci est possible car les écarts de synchronisation entre le terminal 123 et chacune des stations de base 101 et 121 sont faibles. Le trajet ou l'un des trajets déterminés est utilisé alors comme base de synchronisation du terminal 123 sur la station de base 121.

On note que, dans le cadre de 3GPP, le CPICH permet de traiter des multitrajets avec un retard de 20 µs, ce qui permet de compenser une erreur lorsque la cellule de petite taille possède un rayon inférieur ou égal à environ 6 km (soit le retard égal de l'ordre ici de 20 µs multiplié par la célérité de la lumière).

On note également que lorsqu'il est synchronisé sur la station de base 121 le terminal 123 maintient un asservissement sur cette synchronisation par l'intermédiaire du canal CPICH géré par la station de base 121.

Ensuite, le terminal 123 et la station de base 121 échangent des données sur des canaux dédiés DPCH par l'intermédiaire de plusieurs signaux 407 à 409 dont une petite partie a été représentée.

En fin de communication, le terminal 123 et/ou la station de base 121 indiquent par l'intermédiaire du signal 409 que la communication se termine.

Selon une variante non représentée, avant la fin de la communication le réseau impose au terminal un « hand-over » vers la station de base 101. On note que cet « hand-over » peut être effectué rapidement avec synchronisation sur le signal CPICH émis par la station de base 101 puisque le terminal est synchronisé sur la station de base 121 qui est elle-même pseudo-synchronisée sur la station de base 101.

Le terminal 123 retourne donc dans un mode veille et la situation redevient alors celle qui est illustrée en regard de la figure 1.

La station de base 101 émet alors des signaux respectivement 410, 411 et 412 sur les canaux SCH, BCH et PCH, ces signaux étant similaires aux signaux respectivement 400, 401 et 402 décrits précédemment.

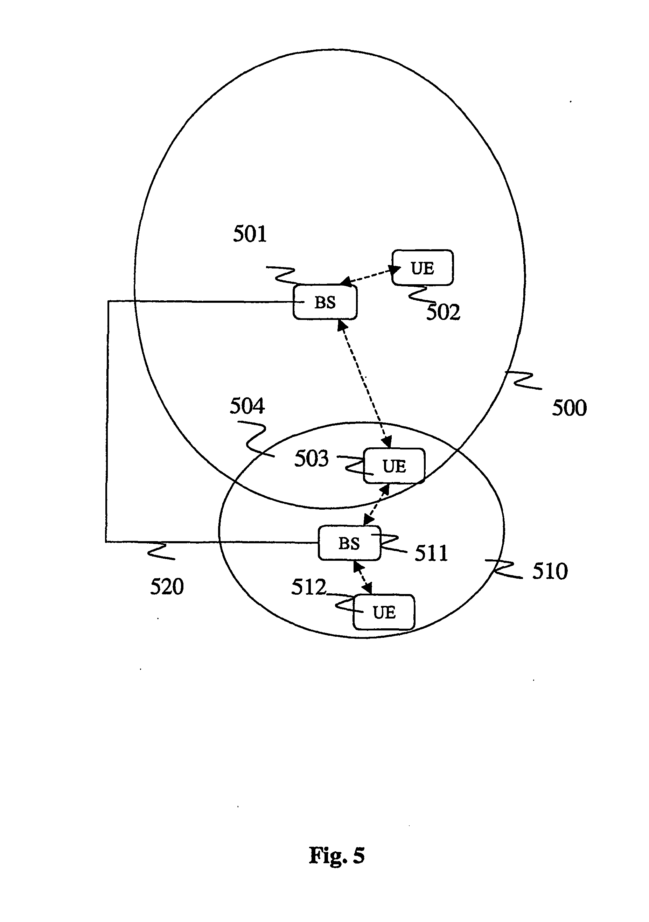

On présente, en relation avec la figure 5, un synoptique de réseau de radiotéléphonie mobile mettant en oeuvre l'invention selon une variante de réalisation.

Le réseau est par exemple un réseau compatible avec la norme UMTS(« Universal Mobile Télécommunication System ») définie par le comité 3GPP (ou « Projet de partenariat pour la troisième génération » de l'anglais « 3^{rd} Generation Partnership Project »).

Le réseau comprend deux cellules 500 et 510 qui couvrent une zone géographiquement commune 504, la cellule 510 étant de taille suffisamment petite pour considérer que le terminal 503 n'a pas besoin d'écouter les canaux de synchronisation SCH de la station 510 pour se synchroniser sur cette station lorsqu'il est synchronisé sur la station 501.

Chacune des cellules 500 et 510 comprend respectivement une station de base respectivement 501 et 511 pouvant gérer les communications à l'intérieur de la cellule correspondante.

On note qu'à titre illustratif, plusieurs terminaux (UE) sont présents dans au moins une des cellules 500 et 510, un terminal 503 étant présent dans la zone commune 504.

Ainsi, le terminal 503 peut donc recevoir ou émettre des signaux en provenance ou à destination des stations de base 501 et 511.

Sur la figure 5, les liaisons entre les différents éléments de la cellule 500 ont été représentées, à un instant donné :
- liaisons radio en traits pointillés fins pour les liaisons entre stations de base 501 ou 511 et terminaux 502, 503 ou 512 ; et
- liaison filaire 520 en trait plein entre les stations de base 501 et 502.

La liaison filaire 520 est par exemple une ligne spécialisée reliant les deux stations de base 501 et 511 ou une partie d'un réseau fixe pouvant transporter des signaux de synchronisation et éventuellement des données.

On note qu'ainsi le terminal 503 est en mode veille, c'est-à-dire dans un mode où il n'est pas en mode communication mais présent et disponible pour une communication dans une des cellules 500 ou 501. Le terminal 503 est donc notamment à l'écoute de signaux émis par la station de base 501 appartenant à la cellule 500. Ces signaux sont émis sur :
- des canaux de transport communs correspondant aux services offerts vers les couches hautes du protocole de communication, notamment sur des canaux BCH ( ou « canal de diffusion » de l'anglais « Broadcast CHannel ») et PCH (ou « canal de recherche de mobile » de l'anglais « Paging CHannel ») ; et
- des canaux communs correspondants à la couche physique du protocole de communication, notamment sur des canaux SCH et CPICH (ou « canal commun pilote » de l'anglais « Common PIlot CHannel »).

On note également qu'en mode veille, les terminaux ne sont pas à l'écoute des canaux dédiés.

Les canaux utilisés par les réseaux 3GPP sont bien connus de l'homme du métier des réseaux mobiles et sont notamment spécifiés dans la norme « 3^{rd} Generation Partnership Project ; Technical Specification Group Radio Access Network ; Physical Channels and mapping of transport channels onto physical channels (FDD) release 1999 » de référence 3GPP TS25.211 et diffusée par le bureau des publications de 3GPP. Ces canaux ne seront donc pas décrits plus amplement.

Par ailleurs, on note que les stations de base 501 et 511 sont très similaires à la station de base 121 illustrée en regard de la figure 3, une interface réseau filaire permettant une liaison 520 vers l'autre station de base (respectivement 511 et 501) et vers une infrastructure fixe du réseau mobile ou d'autres réseaux;

On note également que les terminaux mis en oeuvre dans cette variante de l'invention sont similaires aux terminaux mis en oeuvre dans le premier mode de réalisation de l'invention précédemment décrit.

Les dispositifs de type stations de base ou terminaux ne seront donc pas décrits plus amplement.

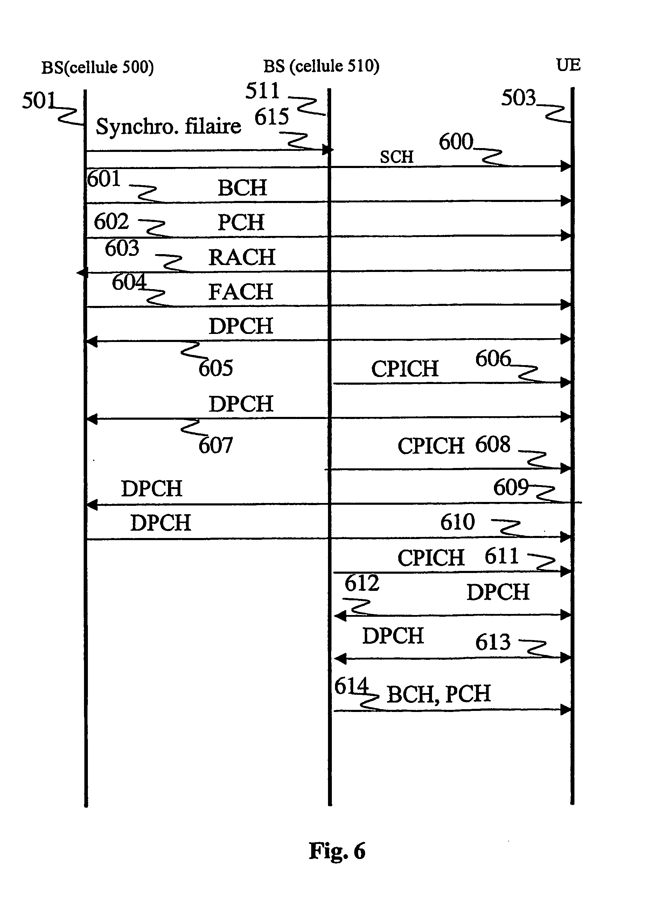

La figure 6 illustre un protocole de communication entre les stations de base 501 et 511 et le terminal 503 lors d'un « hand-over » du terminal 503 de la cellule 500 vers la cellule 501.

Selon le mode de réalisation de l'invention décrite à la figure 5, la station de base 511 ne se synchronise pas sur le canal SCH de la station de base 501. En effet, l'interface radio de réception de la station de base 521 permet de recevoir les signaux émis par les terminaux en communication avec la station de base 511 sur des canaux montants dédiés et ne reçoit pas des signaux émis par la station de base 501 sur un médium radio notamment sur le canal de synchronisation SCH (de l'anglais « Synchronisation CHannel ») radio lorsque la station de base 501 n'est pas dans la zone commune 504.

En revanche, la station de base 511 reçoit un signal de synchronisation 615 émis par la station de base 501 sur la liaison filaire 520.

Le signal de synchronisation 615 est mis en oeuvre selon des techniques connues de l'homme du métier (par exemple, impulsion suivant un certain rythme ou suite de bits particulière sur laquelle la station de base 511 cale sa propre synchronisation). Ce signal de synchronisation ne sera donc pas décrit davantage.

On note cependant que selon l'invention, ce signal de synchronisation peut prendre en compte les délais de propagation de ce signal pour optimiser la synchronisation des stations de base entre elles.

On note également que le fait que le terminal se situe dans une zone 504 limitée géographiquement peut être pris en compte pour améliorer la synchronisation du terminal sur la station de base 511. En effet, on peut notamment prendre en compte la différence du temps de propagation entre le terminal 503 et la station de base 501, d'une part, et du temps de propagation entre le terminal 503 et la station de base 511, d'autre part, en mettant en oeuvre des moyens de compensation, notamment :
- un signal de synchronisation pilotant la station de base 511 qui prend en compte cette différence ; et/ou
- un signal de « hand-over » (signal 610 illustré plus loin) émis vers le terminal 123 et véhiculant une information indiquant la position de la synchronisation.

On note en outre que le signal de synchronisation 615 est émis régulièrement par la station de base 501 et que dès que la pseudo-synchronisation de la station de base 511 se dégrade au delà d'un certain seuil prédéterminé, la station de base 511 se re-synchronise sur la station de base 501 à partir du signal 615.

La station de base 501 émet, en outre, un signal 600 sur le canal descendant SCH à destination des terminaux présents dans la cellule 500 et notamment du terminal 503. Ainsi, le terminal 503 (qui est supposé être en mode veille) est synchronisé sur le canal SCH de la station de base 501.

La station de base 501 émet également un signal 601 sur le canal BCH. Ce signal descendant indique au terminal 503 quel canal PCH il doit écouter. Ainsi, après réception de ce signal, le terminal 503 se met en écoute du canal PCH indiqué par le signal 601.

Puis, la station de base 501 émet un signal à destination du terminal 503 sur le canal PCH indiqué par le signal 601, ce signal permettant de détecter un appel entrant.

Ensuite, en supposant que le terminal 503 désire initialiser une communication, il émet un signal 603 sur le canal RACH (de l'anglais « Random Access CHannel » qui est un canal commun correspondant à un service de couche haute d'accès au canal), ce signal 603 indiquant à la station de base 501 que le terminal 503 demande l'établissement d'une communication.

Puis, la station de base 501 émet un signal 604 d'allocation de canal de communication sur le canal FACH (de l'anglais « Fast Access CHannel » qui est également un canal commun correspondant à un service de couche haute).

Ensuite, la communication s'établit entre le terminal 503 et la station de base 501.

Un ou plusieurs signaux 605 contenant des données correspondant à une application du terminal sont ainsi échangées sur le canal bidirectionnel DPCH.

Parallèlement, le terminal 503 écoute le canal CPICH de la cellule 510 (signal transmis par la station de base 511) pour effectuer des mesures de puissance reçue sur des signaux émis par la station de base 511.

Puis, le terminal transmet le résultat de cette mesure à la station de base 501 par un signal 607 de type DPCH.

Ensuite, l'écoute du canal CPICH de la cellule 510 par le terminal 503 et la mesure de puissance sont réitérées au cours d'une étape 608.

Puis, le terminal 503 transmet le résultat de cette dernière mesure à la station de base 501 par un signal 609 de type DPCH.

Sur base des mesures communiquées à la station de base 501, le réseau (notamment le RNC ou « Radio Network Controller » relié aux stations de base 501 et 511) prend la décision d'effectuer un « hand-over ». La station 501 transmet donc un signal 610 véhiculé sur un canal DPCH et indiquant au terminal 503 qu'il doit se mettre à l'écoute d'un canal DPCH de la cellule 510.

Le terminal 503 étant synchronisé sur le canal SCH émis par la station 501, la station de base 511 étant pseudo-synchronisée sur la station 501 et la cellule 510 étant de petite taille, le terminal est également pseudo-synchronisé sur la station 511 avec une erreur de synchronisation n'excédant pas la somme de :
- la différence de sa propre synchronisation sur la station 501 et de la pseudo-synchronisation de la station 511 sur la station 501 ; et
- du retard dû à la propagation des signaux de la station 511 vers le terminal 503.

On note que cette différence peut être réduite par la mise en oeuvre des moyens de compensation illustrés plus haut.

Puis, le terminal 503 se met en écoute du canal pilote 611 CPICH qui permet selon l'invention d'affiner la synchronisation du terminal 503. En effet, si la cellule 510 est de petite taille et que la station de base 511 est pseudo-synchronisée sur la station 501 (c'est-à-dire si la synchronisation entre les cellules 500 et 510 est grossière et non parfaite, l'erreur de synchronisation étant inférieure à environ 20 ou 30µs alors dans les réseaux synchronisés, connus en soi, l'erreur sur la synchronisation est inférieure à 1 ou 2 µs), l'erreur de synchronisation résultante entre le terminal 53 et la station de base 511 peut être compensée par utilisation du signal 611.

On note que cette opération de synchronisation du terminal 503 sur la station 511 est très rapide même si un changement de fréquence est nécessaire lors du «hand-over ».

On note également que lorsqu'il est synchronisé sur la station de base 511 le terminal 503 maintient un asservissement sur cette synchronisation par l'intermédiaire du canal CPICH géré par la station de base 511.

En effet, le terminal 503 comprend des moyens permettant de tirer partie des trajets multiples affectant un signal émis par une station de base. On note qu'en particulier un récepteur de type « rake » permet de déterminer les différents retards affectant un signal multi-trajet. Ainsi, si le retard n'est pas trop important (c'est-à-dire inférieur à 20 µs dans le cadre de la norme 3GPP), le terminal 503 est capable de se synchroniser sur le canal CPICH.

On note que, dans le cadre de 3GPP, le CPICH permet de traiter des multitrajets avec un retard de 20µs, ce qui permet de compenser une erreur lorsque la cellule de petite taille possède un rayon inférieur ou égal à environ 6km (soit le retard égal de l'ordre ici de 20µs multiplié par la célérité de la lumière).

Ensuite, le terminal 503 et la station de base 511 échangent des données sur des canaux dédiés DPCH par l'intermédiaire de plusieurs signaux 611 et 612 dont une petite partie a été représentée.

En fin de communication, le terminal 503 et/ou la station de base 511 indiquent par l'intermédiaire du signal 612 que la communication se termine.

Le terminal 503 retourne donc dans un mode veille.

La station de base 511 émet alors des signaux 614 sur les canaux SCH, BCH et PCH, ces signaux étant similaires aux signaux respectivement 600, 601 et 602 décrits précédemment.

On note qu'ainsi le terminal 503 continue à être géré par la cellule 510.

Selon une variante non représentée, lorsqu'il est en mode veille et lorsqu'il est dans la zone commune 504, le terminal se met à l'écoute des canaux communs propres à la cellule 500.

Bien entendu, l'invention n'est pas limitée aux exemples de réalisation mentionnés ci-dessus.

En particulier, l'homme du métier pourra apporter toute variante dans la manière dont deux cellules sont pseudo-synchronisées. Ainsi, on pourra considérer que la station de base d'une cellule reçoit un signal de synchronisation émis par une station de base d'une autre cellule par exemple en utilisant une voie filaire une voie hertzienne (notamment canal SCH).

L'invention n'est pas non plus limitée au cas où deux stations de base sont pseudo-synchronisées à l'aide d'un signal émis par l'une d'elle à destination de l'autre mais s'étend au cas où un équipement tiers (par exemple, NCS gérant les deux stations de base ou équipement tiers dédié) émet un signal de synchronisation à destination des deux stations de base.

On note que l'invention ne se limite pas aux réseaux UMTS ou 3GPP mais s'étend à tout réseau cellulaire.

On notera que l'invention ne se limite pas à une implantation purement matérielle mais qu'elle peut aussi être mise en oeuvre sous la forme d'une séquence d'instructions d'un programme informatique ou toute forme mixant une partie matérielle et une partie logicielle. Dans le cas où l'invention est implantée partiellement ou totalement sous forme logicielle, la séquence d'instructions correspondante pourra être stockée dans un moyen de stockage amovible (tel que par exemple une disquette, un CD-ROM ou un DVD-ROM) ou non, ce moyen de stockage étant lisible partiellement ou totalement par un ordinateur ou un microprocesseur.

## Revendications

1. Procédé de synchronisation d'un terminal (123) dans un réseau de communication cellulaire comprenant une pluralité de cellules, dont une première (100, 500) et une seconde (120, 510) cellules associées respectivement à une première (101, 501) et une seconde (121, 511) station de base, lesdites première et seconde cellules se recoupant au moins en partie sur une zone géographiquement commune (120, 504) et étant synchronisées,
ledit terminal étant présent dans ladite zone géographiquement commune, ledit procédé comprenant :
- une première étape de synchronisation sur un signal de synchronisation (SCH 400, 600) émis par ladite première station de base et reçu par ledit terminal ; et
- une seconde étape de synchronisation sur un signal prédéterminé (CPICH 406, 611) dédié au traitement des trajets multiples, émis par ladite seconde station de base et reçu par ledit terminal.

2. Procédé de synchronisation selon la revendication 1, **caractérisé en ce que** ledit terminal met en oeuvre une étape de détermination d'au moins un trajet correspondant audit signal prédéterminé émis par ladite seconde station de base, ladite étape de détermination alimentant ladite seconde étape de synchronisation et étant mise en oeuvre par des moyens d'analyse des trajets multiples subis par ledit signal prédéterminé, ledit trajet ou un desdits trajets correspondant audit signal prédéterminé, dit premier trajet, étant considéré comme base de synchronisation.

3. Procédé de synchronisation selon l'une, quelconque des revendications 1 et 2, **caractérisé en ce que** ladite première étape de synchronisation tolère des erreurs de synchronisation de l'ordre de 5 à 50 µs relativement à ladite seconde station de base.

4. Procédé de synchronisation selon la revendication 3, **caractérisé en ce que** ladite première étape de synchronisation tolère des erreurs de synchronisation de l'ordre de 5 à 30 µs relativement à ladite seconde station de base.

5. Procédé de synchronisation selon l'une quelconque des revendications 1 à 4, **caractérisé en ce que** ladite seconde synchronisation tolère des erreurs de synchronisation inférieures à 5 µs relativement à ladite seconde station de base.

6. Procédé de synchronisation selon l'une quelconque des revendications 1 à 5, **caractérisé en ce que** ladite première station de base transmet une information de synchronisation à ladite seconde station de base permettant la synchronisation de ladite seconde station de base sur ladite première station de base.

7. Procédé de synchronisation selon la revendication 6, **caractérisé en ce que** ladite information de synchronisation est transmise sur une liaison filaire.

8. Procédé de synchronisation selon la revendication 6, **caractérisé en ce que** ladite information de synchronisation est transmise via ledit signal de synchronisation émis par ladite première station de base.

9. Procédé de synchronisation selon l'une quelconque des revendications 1 à 5, **caractérisé en ce qu'**un équipement tiers transmet une information de synchronisation à ladite première station de base et à ladite seconde station de base permettant la synchronisation de ladite seconde station de base sur ladite première station de base.

10. Procédé de transfert intercellulaire d'un terminal (123) dans un réseau de communication cellulaire comprenant une pluralité de cellules, dont une première 2(100, 500) et une seconde cellules (120, 510) associées respectivement à une première (101, 501) et à une seconde (121, 511) stations de base, lesdites première et seconde cellules se recoupant au moins en partie sur une zone géographiquement commune (120, 504) et étant synchronisées,
et ledit terminal pouvant être notamment en mode communication, lorsqu'une communication est établie entre ledit terminal et un terminal distant, et en mode veille, lorsque ledit terminal n'est pas en mode communication mais présent et disponible pour une communication, dans une des cellules dudit réseau,
ledit terminal étant présent dans ladite zone géographiquement commune, ledit procédé comprenant:
- une première étape de synchronisation sur un signal de synchronisation (SCH 400, 600) émis par ladite première station de base et reçu par ledit terminal;
- une seconde étape de synchronisation sur un signal prédéterminé (CPICH 406, 611) dédié au traitement des trajets multiples, émis par ladite seconde station de base et reçu par ledit terminal ;
lorsque ledit terminal dans un mode communication avec ladite première station de base est transféré de ladite première cellule à ladite seconde cellule.

11. Procédé de transfert intercellulaire selon la revendication 10, **caractérisé en ce qu'**il met en oeuvre un procédé de synchronisation selon l'une quelconque des revendications 1 à 9.

12. Procédé de transfert intercellulaire selon l'une quelconque des revendications 10 et 11, **caractérisé en ce que** ladite première cellule englobe ladite seconde cellule et **en ce que** ladite première station de base gère ledit mode veille pour les terminaux présents dans ladite première cellule, ladite seconde station de base pouvant prendre en charge ledit mode communication.

13. Procédé de transfert intercellulaire selon la revendication 12, **caractérisé en ce que** ladite première station de base gère l'ouverture d'une communication pour lesdits terminaux présents dans ladite seconde cellule, puis ledit réseau transfère la gestion de ladite communication à ladite seconde station de base.

14. Terminal destiné à coopérer avec au moins une première station de base associée à une première cellule de réseau cellulaire de communication et une seconde station de base associée à une seconde cellule dudit réseau, ledit terminal pouvant être notamment en mode communication, lorsqu'une communication est établie entre ledit terminal et un terminal distant, et en mode veille, lorsque ledit terminal n'est pas en mode communication mais présent et disponible pour une communication, dans une des cellules dudit réseau,
lesdites première et seconde cellules se recoupant au moins en partie dans une zone géographiquement commune et étant synchronisées,
ledit terminal comprenant :
- des premiers moyens de réception d'un signal de synchronisation (SCH) émis par ladite première station de base ;
- des seconds moyens de réception d'un signal de synchronisation sur un signal prédéterminé (CPICH) dédié au traitement des trajets multiples; émis par ladite seconde station de base ;
lesdits premiers et seconds moyens de réception fonctionnant en parallèle lorsque le terminal est présent dans ladite zone géographiquement commune.

15. Terminal selon la revendication 14, **caractérisé en ce que** lesdits moyens de synchronisation comprennent des moyens d'analyse des trajets multiples subis par ledit signal prédéterminé, aptes à effectuer une détermination d'au moins un trajet correspondant audit signal prédéterminé émis par ladite seconde station de base, ledit trajet ou un desdits trajets correspondant audit signal prédéterminé, dit premier trajet, étant considéré comme base de synchronisation.

16. Terminal selon l'une quelconque des revendications 14 et 15, **caractérisé en ce que** ladite première synchronisation tolère des erreurs de synchronisation de l'ordre de 5 à 50 µs.

17. Terminal selon la revendication 16, **caractérisé en ce que** ladite première synchronisation tolère des erreurs de synchronisation de l'ordre de 5 à 30 µs.

18. Terminal selon l'une quelconque des revendications 14 à 17, **caractérisé en ce que** ladite seconde synchronisation tolère des erreurs de synchronisation inférieures à 5 µs.

## Claims

1. Method for synchronisation of a terminal (123) in a cellular communication network comprising a plurality of cells, including a first cell (100, 500) and a second cell (120, 510) associated respectively with a first (101, 501) and a second (121, 511) base station, said first and second cells at least partly overlapping in a common geographical area (120, 504) and being synchronised,
said terminal being present in said common geographical area, said method comprising:
- a first synchronisation step on a synchronisation signal (SCH 400, 600) transmitted by said first base station and received by said terminal; and
- a second synchronisation step on a predetermined signal (CPICH 406, 611) dedicated to the processing of multiple paths transmitted by said second base station and received by said terminal.

2. Synchronisation method according to claim 1, **characterised in that** said terminal comprises a step of determination of at least one path corresponding to said predetermined signal transmitted by said second base station, said determination step supplying said second synchronisation step and being implemented by means of analysing the multiple paths along which said predetermined signal passes, said path or one of said paths corresponding to said predetermined signal, called first path, being considered as the synchronisation base.

3. Synchronisation method according to either claim 1 or 2, **characterised in that** said first synchronisation step tolerates synchronisation errors of the order of 5 to 50 µs relative to said second base station.

4. Synchronisation method according to claim 3, **characterised in that** said first synchronisation step tolerates synchronisation errors of the order of 5 to 30 µs relative to said second base station.

5. Synchronisation method according to any one of claims 1 to 4, **characterised in that** said second synchronisation step tolerates synchronisation errors of less than 5 µs relative to the said second base station.

6. Synchronisation method according to any one of claims 1 to 5, **characterised in that** said first base station transmits synchronisation information to said second base station enabling synchronisation of said second base station on said first base station.

7. Synchronisation method according to claim 6, **characterised in that** said synchronisation information is transmitted on a wire link.

8. Synchronisation method according to claim 6, **characterised in that** said synchronisation information is transmitted through said synchronisation signal transmitted by said first base station.

9. Synchronisation method according to any one of claims 1 to 5, **characterised in that** a third piece of equipment transmits synchronisation information to said first base station and to said second base station enabling said second base station to be synchronised on said first base station.

10. Method of hand-over transfer of a terminal (123) in a cellular communication network comprising a plurality of cells, including a first cell (100, 500) and a second cell (120, 510) associated respectively with a first base station (101, 501) and a second base station (121, 511), said first and second cells at least partly overlapping in a common geographical area (120, 504) and being synchronised,
and said terminal possibly being in communication mode when a communication has been set up between the terminal and a remote terminal, and in standby mode when said terminal is not in communication mode but is present and is available for a communication in one of the network cells,
said terminal being present in said common geographical area, said method comprising:
- a first synchronisation step on a synchronisation signal (SCH 400, 600) transmitted by said first base station and received by said terminal;
- a second synchronisation step on a predetermined signal (CPICH 406, 611) dedicated to the processing of multiple paths, transmitted by said second base station and received by said terminal;
when said terminal in communication mode with said first base station is transferred from said first cell to said second cell.

11. Hand-over method according to claim 10, **characterised in that** it uses a synchronisation method according to any one of claims 1 to 9.

12. Hand-over transfer method according to either claim 10 or 11, **characterised in that** said first cell surrounds said second cell and **in that** said first base station manages said standby mode for terminals present in said first cell, said second base station being able to manage said communication mode.

13. Hand-over transfer method according to claim 12, **characterised in that** said first base station manages opening of a communication for said terminals present in said second cell, and said network then transfers management of said communication to said second base station.

14. Terminal that will cooperate with at least a first base station associated with a first cell in the cellular communication network and a second base station associated with a second cell of said network, said terminal possibly being in communication mode, when a communication is set up between said terminal and a remote terminal, and in standby mode when said terminal is not in communication mode but is present and available for a communication in one of said network cells, said first and second cells at least partly overlapping in a common geographical area and being synchronised,said terminal comprising:
- first means for receiving a synchronisation signal (SCH) transmitted by said first base station;
- second means for receiving a synchronisation signal on a predetermined signal (CPICH) dedicated to processing of multiple paths, transmitted by said second base station;
said first and second reception means operating in parallel when the terminal is present on said common geographical area.

15. Terminal according to claim 14, **characterised in that** said synchronisation means comprise means of analysing multiple paths undergone by said predetermined signal, capable of determining at least one path corresponding to said predetermined signal transmitted by said second base station, said path or one of said paths corresponding to said predetermined signal, called first path, being considered as a synchronisation base.

16. Terminal according to either claim 14 or 15, **characterised in that** said first synchronisation tolerates synchronisation errors of the order of 5 to 50 µs.

17. Terminal according to claim 16, **characterised in that** said first synchronisation tolerates synchronisation errors of the order of 5 to 30 µs.

18. Terminal according to any one of claims 14 to 17, **characterised in that** said second synchronisation tolerates synchronisation errors of less than 5 µs.

## Patentansprüche

1. Verfahren zur Synchronisation eines Endgeräts (123) in einem zellularen Kommunikationssystem mit einer Vielzahl von Zellen, darunter einer ersten Zelle (100, 500) und einer zweiten Zelle (120, 510), die einer ersten Basisstation (101, 501) bzw. einer zweiten Basisstation (121, 511) zugeordnet sind, wobei sich die erste und die zweite Zelle zumindest teilweise in einem geografisch gemeinsamen Bereich (120, 504) überschneiden und synchronisiert sind,
wobei sich das Endgerät im geografisch gemeinsamen Bereich aufhält und das Verfahren Folgendes umfasst:
- einen ersten Schritt zur Synchronisation auf ein Synchronisationssignal (SCH 400, 600), das von der ersten Basisstation gesendet und vom Endgerät empfangen wird, und
- einen zweiten Schritt zur Synchronisation auf ein vorgegebenes Signal (CPICH 406, 611) für die Mehrfachwege-Verarbeitung, das von der zweiten Basisstation gesendet und vom Endgerät empfangen wird.

2. Synchronisationsverfahren nach Anspruch 1, **dadurch gekennzeichnet, dass** das Endgerät einen Schritt zur Bestimmung von mindestens einem Weg einsetzt, der dem von der zweiten Basisstation gesendeten vorgegebenen Signal entspricht, wobei dieser Bestimmungsschritt in den zweiten Synchronisationsschritt eingeht und von Mitteln zur Analyse der Mehrfachwege durchgeführt wird, denen das vorgegebene Signal unterliegt, wobei der Weg oder einer der Wege, die dem vorgegebenen Signal entsprechen und als erster Weg bezeichnet werden, als Synchronisationsbasis betrachtet werden.

3. Synchronisationsverfahren nach einem beliebigen der Ansprüche 1 und 2, **dadurch gekennzeichnet, dass** der erste Synchronisationsschritt Synchronisationsfehler in der Größenordnung von 5 bis 50 µs bezüglich der zweiten Basisstation duldet.

4. Synchronisationsverfahren nach Anspruch 3, **dadurch gekennzeichnet, dass** der erste Synchronisationsschritt Synchronisationsfehler in der Größenordnung von 5 bis 30 µs bezüglich der zweiten Basisstation duldet.

5. Synchronisationsverfahren nach einem beliebigen der Ansprüche 1 bis 4, **dadurch gekennzeichnet, dass** die zweite Synchronisation Synchronisationsfehler von weniger als 5 µs bezüglich der zweiten Basisstation duldet.

6. Synchronisationsverfahren nach einem beliebigen der Ansprüche 1 bis 5, **dadurch gekennzeichnet, dass** die erste Basisstation eine Synchronisationsinformation zur zweiten Basisstation überträgt, die die Synchronisation der zweiten Basisstation auf die erste Basisstation ermöglicht.

7. Synchronisationsverfahren nach Anspruch 6, **dadurch gekennzeichnet, dass** diese Synchronisationsinformation drahtgebunden übertragen wird.

8. Synchronisationsverfahren nach Anspruch 6, **dadurch gekennzeichnet, dass** diese Synchronisationsinformation über das von der ersten Basisstation gesendete Synchronisationssignal übertragen wird.

9. Synchronisationsverfahren nach einem beliebigen der Ansprüche 1 bis 5, **dadurch gekennzeichnet, dass** eine dritte Einrichtung eine Synchronisationsinformation zur ersten Basisstation und zur zweiten Basisstation überträgt, die die Synchronisation der zweiten Basisstation auf die erste Basisstation ermöglicht.

10. Verfahren zur interzellularen Übergabe eines Endgeräts (123) in einem zellularen Kommunikationssystem mit einer Vielzahl von Zellen, darunter einer ersten Zelle (100, 500) und einer zweiten Zelle (120, 510), die einer ersten Basisstation (101, 501) bzw. einer zweiten Basisstation (121, 511) zugeordnet sind, wobei die erste und die zweite Zelle sich zumindest teilweise in einem geografisch gemeinsamen Bereich (120, 504) überschneiden und synchronisiert sind,
und das Endgerät sich insbesondere im Verbindungsbetrieb befinden kann, wenn eine Verbindung zwischen diesem Endgerät und einem entfernten Endgerät aufgebaut ist, und im Standby-Betrieb, wenn das Endgerät sich nicht im Verbindungsbetrieb befindet, sich aber in einer der Zellen dieses Systems aufhält und verbindungsbereit ist,
wobei sich das Endgerät im geografisch gemeinsamen Bereich aufhält und das Verfahren Folgendes umfasst:
- einen ersten Schritt zur Synchronisation auf ein Synchronisationssignal (SCH 400, 600), das von der ersten Basisstation gesendet und vom Endgerät empfangen wird,
- einen zweiten Schritt zur Synchronisation auf ein vorgegebenes Signal (CPICH 406, 611) für die Mehrfachwege-Verarbeitung, das von der zweiten Basisstation gesendet und vom Endgerät empfangen wird,
wenn das Endgerät im Verbindungsbetrieb mit der ersten Basisstation von der ersten Zelle an die zweite Zelle übergeben wird.

11. Interzellulares Übergabeverfahren nach Anspruch 10, **dadurch gekennzeichnet, dass** es ein Synchronisationsverfahren nach einem beliebigen der Ansprüche 1 bis 9 einsetzt.

12. Interzellulares Übergabeverfahren nach einem beliebigen der Ansprüche 10 und 11, **dadurch gekennzeichnet, dass** die erste Zelle die zweite Zelle beinhaltet und dass die erste Basisstation den Standby-Betrieb für die Endgeräte verwaltet, die sich in der ersten Zelle aufhalten, wobei die zweite Basisstation den Verbindungsbetrieb übernehmen kann.

13. Interzellulares Übergabeverfahren nach Anspruch 12, **dadurch gekennzeichnet, dass** die erste Basisstation den Aufbau einer Verbindung für die Endgeräte verwaltet, die sich in der zweiten Zelle aufhalten, und das System die Verwaltung dieser Verbindung anschließend an die zweite Basisstation übergibt.

14. Endgerät zur Kooperation mit mindestens einer ersten Basisstation, die einer ersten Zelle eines zellularen Kommunikationssystems zugeordnet ist, und einer zweiten Basisstation, die einer zweiten Zelle dieses Systems zugeordnet ist, wobei das Endgerät sich insbesondere im Verbindungsbetrieb befinden kann, wenn eine Verbindung zwischen diesem Endgerät und einem entfernten Endgerät aufgebaut ist, und im Standby-Betrieb, wenn das Endgerät sich nicht im Verbindungsbetrieb befindet, sich aber in einer der Zellen des Systems aufhält und verbindungsbereit ist,
wobei sich die erste und die zweite Zelle zumindest teilweise in einem geografisch gemeinsamen Bereich überschneiden und synchronisiert sind,
wobei das Endgerät Folgendes umfasst:
- erste Mittel zum Empfangen eines Synchronisationssignals (SCH), das von der ersten Basisstation gesendet wird,
- zweite Mittel zum Empfangen eines Signals zur Synchronisation auf ein vorgegebenes Signal (CPICH) für die Mehrfachwege-Verarbeitung, das von der zweiten Basisstation gesendet wird;
wobei die ersten und die zweiten Empfangsmittel parallel arbeiten, wenn sich das Endgerät in dem geografisch gemeinsamen Bereich aufhält.

15. Endgerät nach Anspruch 14, **dadurch gekennzeichnet, dass** die Synchronisationsmittel Mittel zur Analyse der Mehrfachwege, denen das vorgegebene Signal unterliegt, umfassen, die in der Lage sind, mindestens einen Weg zu bestimmen, der dem von der zweiten Basisstation gesendeten vorgegebenen Signal entspricht, wobei der Weg oder einer der Wege, der dem vorgegebenen Signal entspricht und als erster Weg bezeichnet wird, als Synchronisationsbasis betrachtet wird.

16. Endgerät nach einem beliebigen der Ansprüche 14 und 15, **dadurch gekennzeichnet, dass** die erste Synchronisation Synchronisationsfehler in der Größenordnung von 5 bis 50 µs duldet.

17. Endgerät nach Anspruch 16, **dadurch gekennzeichnet, dass** die erste Synchronisation Synchronisationsfehler in der Größenordnung von 5 bis 30 µs duldet.

18. Endgerät nach einem beliebigen der Ansprüche 14 bis 17, **dadurch gekennzeichnet, dass** die zweite Synchronisation Synchronisationsfehler von weniger als 5 µs duldet.
